(19) 

**Europäisches Patentamt**
**European Patent Office**
**Office européen des brevets**

(11) **EP 3 910 560 A1**

(12) **EUROPEAN PATENT APPLICATION**

(43) Date of publication:
**17.11.2021 Bulletin 2021/46**

(51) Int Cl.:
***G06N 5/00*** *(2006.01)*

(21) Application number: **21159908.9**

(22) Date of filing: **01.03.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.05.2020 JP 2020084415**

(71) Applicant: **FUJITSU LIMITED**
**Kanagawa 211-8588 (JP)**

(72) Inventor: **Kimura, Keiji**
**Kanagawa, 211-8588 (JP)**

(74) Representative: **Hoffmann Eitle**
**Patent- und Rechtsanwälte PartmbB**
**Arabellastraße 30**
**81925 München (DE)**

(54) **INFORMATION PROCESSING APPARATUS, METHOD OF SOLVING, AND SOLVING PROGRAM**

(57) A method of solving implemented by a computer, the method includes: predicting a function corresponding to performance of an algorithm, the algorithm being configured to perform mapping from a combination of a plurality of constraint conditions to a solution space; expressing the function predicted by the prediction processing as an objective function as an optimization problem which does not include the plurality of constraint conditions; minimizing a value of the function; and identifying the combination of the plurality of constraint conditions that obtains an optimum solution from the algorithm by using the function the value of which is minimized.

FIG. 2

**Description**

FIELD

The embodiment discussed herein is related to an information processing apparatus, a method of solving, and a non-transitory computer-readable storage medium storing a solving program.

BACKGROUND

A functionally arranged step organized by grouping mechanical facilities of the same type of a function and performance in a machining factory or the like is referred to as a "job shop". In the job shop, jobs are sequentially processed in a sequence specified on a job-by-job basis. In such a job shop, there is a problem of determining the sequence of processing the jobs with the machines so as to optimize a given evaluation standard (hereafter, job-shop scheduling problem (JSP)).

In the JSP, constraint conditions are given and an optimum solution satisfying the constraint conditions is obtained, and various techniques have been proposed.

There is a known system or the like that, at the time of making the production plan, enables making of an optimum production plan by creating a production sequence of products scheduled to be produced and optimizing production time periods of the respective products by simulated annealing and doing by a heuristic method to decrease the production time periods. Also, there is proposed a technique in which the JSP is expressed in a combinatorial optimization problem called quadratic unconstrained binary optimization (QUBO) and a QUBO solver is applied to the problem.

Examples of the related art include Japanese Laid-open Patent Publication Nos. 2009-294952 and 2003-280714.

Examples of the related art also include the following document: Venturelli, Davide et al., "Job Shop Scheduling Solver based on Quantum Annealing", Quantum Artificial Intelligence Laboratory (QuAIL), NASA Ames, U.S.R.A. Research Institute for Advanced Computer Science (RIACS), 1QB Information Technologies (1QBit), arXiv: 1506.08479v2 [quant-ph] 17 Oct. 2016

SUMMARY

[Technical Problem]

However, complex constraints are often used for the JSP in practice, and when an optimum solution is obtained with existing optimization software, a very large computer resources and a very large processing time period are consumed. The optimum solution obtained in this manner is not necessarily realistic in practice. Thus, it is usually difficult to obtain an optimum solution for a complex combination that expresses practice.

Accordingly, in one aspect, an object is to efficiently obtain an optimum solution for a complex combination.

[Solution to Problem]

According to an aspect of the embodiments, provided is a method of solving implemented by a computer. In an example, the method includes: predicting a function corresponding to performance of an algorithm, the algorithm being configured to perform mapping from a combination of a plurality of constraint conditions to a solution space; expressing the function predicted by the prediction processing as an objective function as an optimization problem which does not include the plurality of constraint conditions; minimizing a value of the function; and identifying the combination of the plurality of constraint conditions that obtains an optimum solution from the algorithm by using the function the value of which is minimized.

[Effects of Invention]

Solving performance for a combinatorial optimization problem is improved.

BRIEF DESCRIPTION OF DRAWINGS

FIG. 1 illustrates an example of a job shop scheduling problem (JSP);

FIG. 2 illustrates an example of a hardware configuration of an information processing apparatus;

FIG. 3 illustrates an example of a functional configuration according to an embodiment;

FIG. 4 is a diagram for explaining a flow of the entirety of a solving process according to the present embodiment;

FIG. 5 is a diagram for explaining an example of a schedule determination process performed by a schedule determination unit;

FIG. 6 illustrates an example of a control process performed by the control unit;

FIG. 7 is a diagram for explaining the solving process performed by a solution processing unit;

FIG. 8 is a flowchart for explaining an updating process in step S69 illustrated in FIG. 7; and

FIG. 9 illustrates results obtained by using verification data according to the present embodiment.

## DESCRIPTION OF EMBODIMENT(S)

Hereafter, an embodiment of the present invention is described with reference to the drawings. An example of a job shop scheduling problem (hereafter referred to as "JSP") of a plurality of steps and a plurality of machines, which is considered to be difficult to solve among JSP problems, is described.

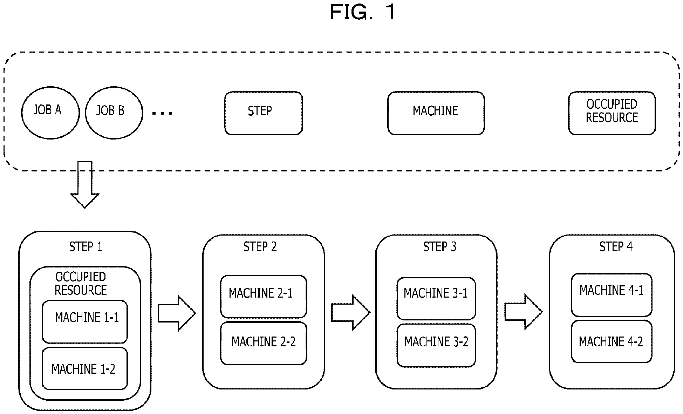

FIG. 1 illustrates an example of a job shop scheduling problem (JSP). In the JSP illustrated in FIG. 1, a case in which a plurality of steps are performed for each of a plurality of jobs is presented. In each of the steps, one or more of the plurality of machines may perform the same operation, and performance may vary among these machines. Occupied resources include operators (persons) and the number of operators allocated to the steps.

In FIG. 1, it is assumed that a plurality of steps such as step 1, step 2, step 3, and step 4 are used for each of jobs A, B, and the like. A machine 1-1 and a machine 1-2 are operable for the step 1, a machine 2-1 and a machine 2-2 are operable for the step 2, a machine 3-1 and a machine 3-2 are operable for the step 3, and a machine 4-1 and a machine 4-2 are operable for the step 4.

In such a plurality of steps, regarding the occupied resources, operators are usually assigned to the step 1, and the number of operators to be usually assigned varies depending on the jobs. When persons are assigned to the machine 1-1 and the machine 1-2 in the step 1, there is an upper limit on the number of persons who are able to work at the same time. In some cases, whether the operators are assigned is determined for each of the machine 1-1 and the machine 1-2.

In a problem setting for such an example of the JSP, constraint conditions made by combining a plurality of conditions, for example, as follows are determined: given N jobs are processed in the sequence of M steps; in each step, one or more usable machines having different performances are provided, and one of the provided machines is used; there is a step or steps in which only one job is able to be processed at a time, and there is a step or steps in which a plurality of jobs are able to be processed; while a certain job is being processed, a process of another job is unable to be started; each job has a deadline; in one or more steps, there is a resource (occupied resource) to be shared by the machines in the step; and each machine has a time slot in which the machine is usable. In addition, it is usual to use a schedule that satisfies the following items: the given constraint conditions are satisfied; for each job, it is determined which machine starts processing at what time in each step; and the number of days until the processes of all the jobs are completed is minimized.

The above-described problem setting is an example of the JSP that may be solved by an embodiment. The present embodiment is applicable to any problem of minimizing the cost for combinations of constraint conditions and is not limited to the above-described example of the JSP.

The present embodiment proposes a new method of solving for a JSP that utilizes a quadratic unconstrained binary optimization (QUBO) solver. In the existing technology, there is a technique in which a JSP is expressed as a combinatorial optimization problem called the QUBO to which a QUBO solver is applied. This technique has the following problems. Although the method is effective for small-scale problems, a very large number of 0-1 variables are used for large-scale problems. In a combinatorial optimization problem, when the number of 0-1 variables is large, a calculation time period exponentially increases, and accordingly, it is difficult to solve with the existing QUBO solver.

In order to solve this problem, the inventors have created the following procedure: a) a search space is set as a set of job sequences; b) a map from the job sequences to a solution space for a JSP is built as an algorithm; c) the quality of the algorithm is predicted with a quadratic regression model; d) based on the prediction model, the search space that is the set of job sequences is formulated as a QUBO; e) the formulated problem is solved by the QUBO solver; and f) the algorithm constructed in b) is applied to the obtained solution to convert it into a solution in the solution space for a JSP.

The present embodiment presents, by using the above-described procedure, a new method of solving the JSP that uses neither a large number of 0-1 variables nor expression, as a mathematical expression, of complex constraints appearing in practice. Processing by the method of solving the JSP according to the present embodiment is realized by an information processing apparatus 100 described below.

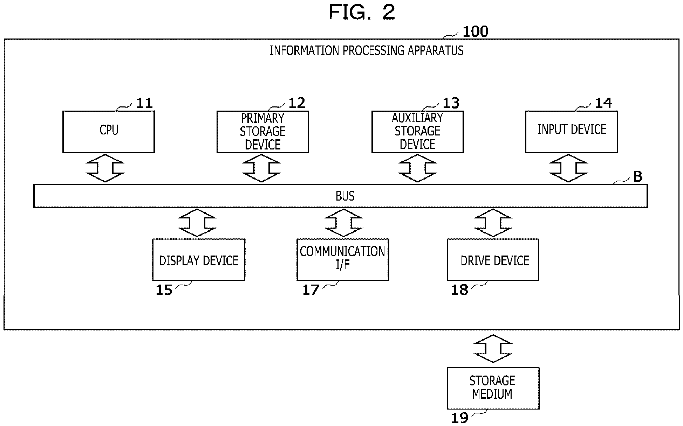

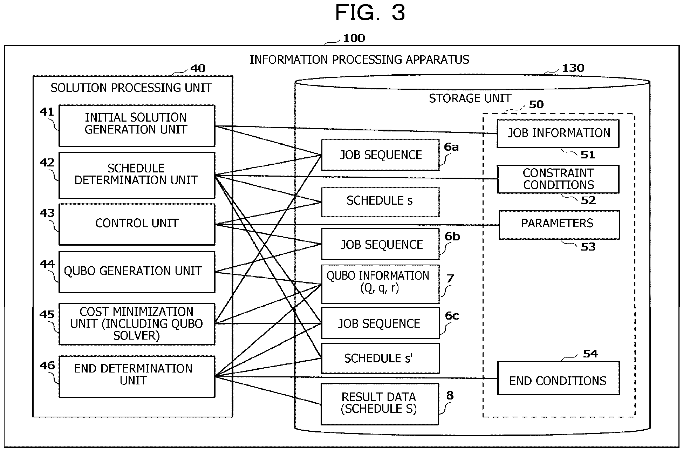

FIG. 2 illustrates an example of a hardware configuration of the information processing apparatus. In FIG. 2, the information processing apparatus 100 is a computer that includes a central processing unit (CPU) 11, a primary storage device 12, an auxiliary storage device 13, an input device 14, a display device 15, a communication interface (I/F) 17, and a drive device 18. The information processing apparatus 100 is coupled to a bus B. Storages including the primary storage device 12, the auxiliary storage device 13, and external storage to which the information processing apparatus 100 is accessible correspond to a storage unit 130 in a functional block diagram (FIG. 3), which will be described later.

The CPU 11 corresponds to a processor that controls the information processing apparatus 100. The CPU 11 realizes various kinds of processing according to the present embodiment to be later described by executing a program stored in the storage unit 130. The input device 14 is operated by a user and inputs data in response to the operation, and the display device 15 that serves as a user interface displays various screens. The communication I/F 17 controls communication with an external device.

A solving program according to the present embodiment stored in a storage medium 19 (for example, a compact disc read-only memory (CD-ROM)) is installed in the storage unit 130 via the drive device 18 and becomes executable by the CPU 11.

The storage medium 19 that stores programs according to the present embodiment is not limited to the CD-ROM. It is sufficient that the storage medium 19 is any one or more non-transitory tangible media having a computer-readable structure. Instead of the CD-ROM, the computer-readable storage medium may be a portable recording medium such as a digital versatile disk (DVD) or a Universal Serial Bus (USB) memory or a semiconductor memory such as a flash memory.

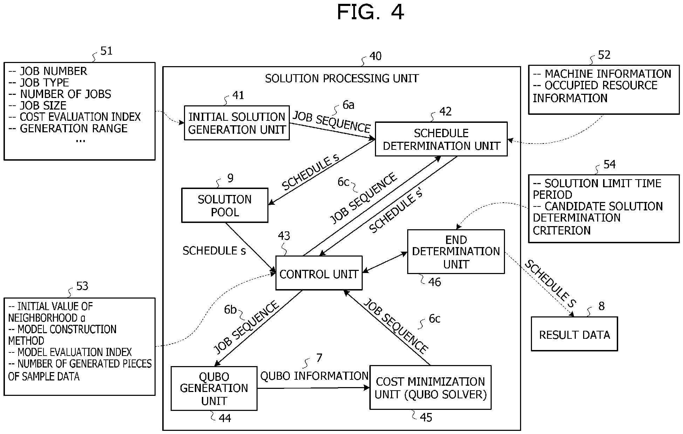

With reference to FIGs. 3 and 4, an example of a functional configuration and a flow of the entirety of a solving process according to the present embodiment are described. FIG. 3 illustrates the example of the functional configuration according to the present embodiment. In FIG. 3, the information processing apparatus 100 includes a solution processing unit 40 that obtains an optimum solution for the JSP by a method of solving designed by the inventors. FIG. 4 is a diagram for explaining the flow of the entirety of the solving process according to the present embodiment.

The storage unit 130 stores input data 50, job sequences 6a, schedules s, job sequences 6b, QUBO information 7, job sequences 6c, schedules s', result data 8, and the like. The input data 50 mainly includes job information 51, constraint conditions 52, parameters 53, an end conditions 54, and the like. The job sequences 6a, the job sequences 6b, and the job sequences 6c are examples of a combination of a plurality of constraint conditions.

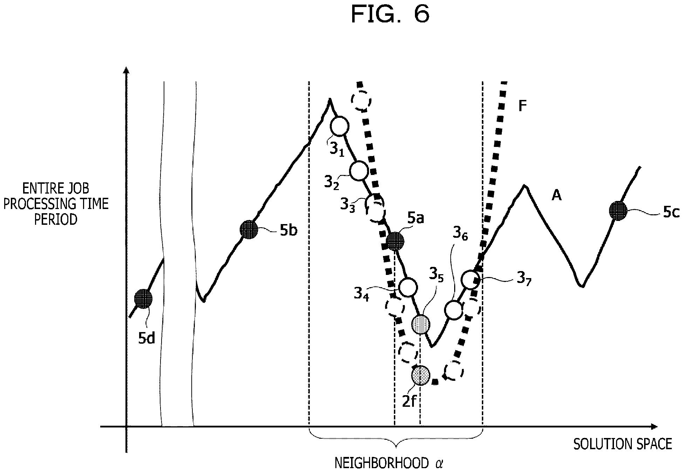

The solution processing unit 40 is a processing unit that estimates performance of a schedule determination process (schedule determination algorithm) as a quadratic regression model (a function F (FIG. 6) to be later described), expresses the estimated quadratic regression model as an objective function in a QUBO, and minimizes the quadratic regression model by applying the QUBO solver. The solution processing unit 40 further includes an initial solution generation unit 41, a schedule determination unit 42, a control unit 43, a QUBO generation unit 44, a cost minimization unit 45, and an end determination unit 46. The solution processing unit 40 that includes the initial solution generation unit 41, the schedule determination unit 42, the control unit 43, the QUBO generation unit 44, the cost minimization unit 45, and the end determination unit 46 is realized when the CPU 11 executes corresponding programs.

When the solution processing unit 40 performs the solving process, the input data 50 is stored in the storage unit 130. The input data 50 includes the job information 51, the constraint conditions 52, the parameters 53, the end conditions 54, and the like.

The job information 51 indicates information such as, on a job-by-job basis, a job number, a job type, the number of jobs, and a job size, cost evaluation indices, a generation range (neighborhood size), and the like. The cost evaluation indices are parameters for, for example, the upper limit value of an entire job processing time period and the number of deadline violation jobs for designating indices for evaluating the merit of a schedule s. The generation range designates the size of the neighborhood when the initial solution generation unit 41 generates a job sequence 6a.

The constraint conditions 52 include machine information, occupied resource information, and the like input to the schedule determination unit 42. According to the present embodiment, the constraint conditions 52 impose a limitation in procedural processes and are not included in the parameters 53 related to obtaining of the optimum solution. In the machine information, operable time slots of machines, processing speeds, types of jobs that are able to be processed, and so force are designated. The occupied resource information designates occupied resources (operators, molds, and so force) used for specific types of jobs or machines. The schedule determination unit 42 determines the schedules s so as to satisfy the constraint conditions 52 for the job sequences 6a given from the initial solution generation unit 41 on a job sequence 6a by job sequence 6a basis.

The parameters 53 designate an initial value of a neighborhood a, a model construction method, a model evaluation index, and the like. As an example, one of a stepwise method, L0 normalization, and the like is designated as the model construction method. As a model evaluation index, one of a square error (for example, mean square error (MSE)), Akaike information criterion (AIC), Bayesian information criterion (BIC), and the like is designated. The number of generated pieces of sample data designates the number of job sequences 6b randomly generated by the control unit 43.

The end conditions 54 designate one or more items from among items such as a solution limit time period and a candidate solution determination criterion for obtaining a candidate solution according to the present embodiment.

The initial solution generation unit 41 reads the job information 51 of the input data 50, generates a plurality of the job sequences 6a, and causes the schedule determination unit 42 to determine a schedule for each of the generated job sequences 6a. The created job sequences 6a are stored in the storage unit 130. The plurality of job sequences 6a are generated such that the distance between the job sequences 6a is within the generation range designated in the job information 51. As an example of calculation of the distance, a Hamming distance may be used.

The schedule determination unit 42 determines the schedules s for the job sequences 6a by using the constraint conditions 52 for schedule determination in response to notification of the plurality of job sequences 6a from the initial solution generation unit 41. The schedule determination unit 42 is an example of a schedule determination algorithm. The determined schedules s are stored in the storage unit 130 (also referred to as being held in a solution pool 9) in association with the respective job sequences 6a used in the determination. The schedules s are examples of an initial solution.

The control unit 43 performs control that efficiently operates the QUBO generation unit 44 and the cost minimization unit 45. In a random manner, the control unit 43 generates, in neighborhood a, a job sequence 6b for the job sequence 6a associated with the schedule s obtained by the schedule determination unit 42 and causes the schedule determination unit 42 to determine the schedule. Randomly generated job sequences 6b and the schedules corresponding to the respective job sequences 6b correspond to sample data.

The control unit 43 gives the sample data to the QUBO generation unit 44, causes the QUBO generation unit 44 to predict by using the quadratic regression model, expresses the predicted quadratic regression model as the objective function in the QUBO, and performs minimization by applying the QUBO solver by using the cost minimization unit 45. Based on the prediction by using the quadratic regression model, a schedule s' and a job sequence 6c most suitable for a target are obtained.

With such a configuration, according to the present embodiment, a schedule S that realizes a minimum cost may be identified. The minimum cost corresponds to an event that is closest to a determined target. Examples of the minimum cost include, satisfaction of the constraint conditions 52, achievement of the job in the smallest number of days, completion of the job just at a date and time that are designated, and completion of the job within a budget. The schedule S is an example of the optimum solution.

The QUBO generation unit 44 predicts, by using the quadratic regression model, the quality of the schedule obtained from the schedule determination unit 42 by using a plurality of the job sequences 6b in the neighborhood $\alpha$ notified from the control unit 43. The QUBO generation unit 44 expresses the predicted quadratic regression model as the objective function in the QUBO and notifies the cost minimization unit 45 of the QUBO information 7 representing the QUBO.

The cost minimization unit 45 corresponds to the QUBO solver, constructs the QUBO by using the QUBO information 7, and obtains a combination that satisfies the constraint conditions for minimizing the cost. The cost minimization unit 45 identifies the job sequence 6c most suitable for the target and notifies the control unit 43 of the identified job sequence 6c. The job sequence 6c is stored in the storage unit 130.

Upon reception of the notification of the job sequence 6c from the cost minimization unit 45, the control unit 43 causes the schedule determination unit 42 to determine the schedule s'. The obtained schedule s' is stored in the storage unit 130. For example, the control unit 43 selects the job sequence, and further, changes the neighborhood $\alpha$ to repeat the process similar to the above description until the schedule s' by the job sequence 6c obtained by the cost minimization unit 45 improves the cost more than the schedule s.

The end determination unit 46 determines an end of the solving process based on the end conditions 54. When it is determined that the process is to be ended, the end determination unit 46 outputs to the storage unit 130 the result data 8 indicating the obtained schedule S that realizes minimum cost. When it is determined that the process is not to be ended, the end determination unit 46 requests the control unit 43 to repeat the process. For example, the control unit 43 selects the job sequence, and further, changes the neighborhood $\alpha$ to repeat the process similar to the above description.

When the solution limit time period of the end conditions 54 is reached or the candidate solution determination criterion is satisfied, it is determined that the process is to be ended. The solution limit time period indicates an upper limit value of the time period taken to perform the solving process. The candidate solution determination criterion indicates the number of candidate solutions to be obtained in order from the closest to the optimum solution.

A technique for solving an optimization problem by using the QUBO solver according to the present embodiment having been found by the inventors is described. It is not practical to determine schedules for all job sequences. In order to address this problem, the inventors have conducted the following discussion.

For the job i (i = 1, ..., n), the sequence vector is $p = (p_i, ..., p_n)^T$. For example, when $p_1 = 2$, job 1 means the second from the front as a sequence. A set P of sequence vectors p is defined as follows.

$$P = \{p \in \{1, \dots, n\}^n : p_i \neq p_j (i \neq j, i, j = 1, \dots, n)\}$$

$$f(p) = p^T Q p + q^T p + r$$

$$P(p^0, \alpha) = \{p \in P : |p_i - p_i^0| \leq \alpha\}$$

$$\min \ p^T Q p + q^T p + r$$

$$\text{s.t.} \ p \in P(P^0, \alpha)$$

$$\min \ p^T Q p + q^T p + r,$$

$$\text{s.t.} \ p_i = \sum_{j=1}^{n} j x_{ij} \ (i = 1, \dots, n), \quad (C)$$

$$\sum_{j=1}^{n} x_{ij} = 1 (i = 1, \dots, n),$$

$$\sum_{i=1}^{n} x_{ij} = 1 (j = 1, \dots, n),$$

$$x_{ij} = 0 (i = 1, \dots, n; j \notin [p_i^0 - \alpha, p_i^0 + \alpha]),$$

$$x_{ij} \in \{0,1\} (i = 1, \dots, n; j = 1, \dots, n)$$

$$p_i \in \{1, \dots, n\} (i = 1, \dots, n)$$

When the equality constraint (C) is substituted into the objective function, the variable pi is eliminated. When an equality constraint other than the equality constraint (C) is added to the objective function as a constraint term, this optimization problem is able to be expressed as the QUBO (QUBO generation). When such QUBO is generated, the QUBO information 7 (i.e., Q, q, and r in the above expressions) is determined. Thus, the QUBO solver is able to be applied.

The schedule is improved by repeating the following procedure: solving this QUBO; newly setting an obtained sequence vector as $p_1^0$ being the center of the neighborhood; newly generating the quadratic regression model (function F to be later described); and solving the QUBO again.

The solution processing unit 40 according to the present embodiment enables, by information processing, realization of the above-described new technique based on the discussion by the inventors.

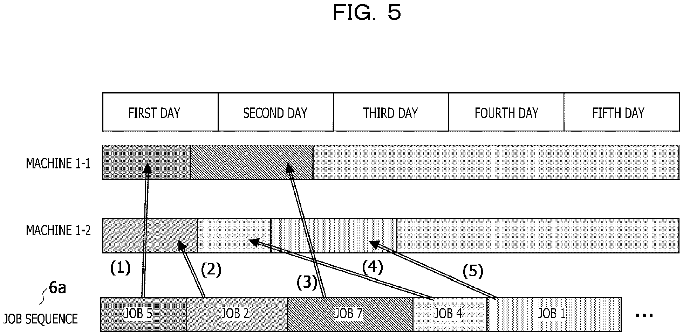

FIG. 5 is a diagram for explaining an example of the schedule determination process performed by the schedule determination unit. FIG. 5 illustrates an example of the schedule determination process for the step 1 illustrated in FIG. 1. The schedule determination unit 42 assigns jobs to the machines 1-1 and 1-2 usable in the step 1 illustrated in FIG. 1 for the job sequence 6a in which the jobs 5, 2, 7, 4, and 1 are arranged in this order. Time periods relating to the respective jobs 1 to 7 are each represented by the length of the horizontal width.

The schedule determination unit 42 considers the constraint conditions 52 in job assignment. In the schedule determination unit 42, the constraint conditions 52 is considered in a procedural manner. Thus, the constraint conditions 52 are not necessarily defined as mathematical expressions according to the present embodiment.

This example illustrates an example of a schedule in which, in accordance with the job sequence 6a and the constraint conditions 52,

(1) job 1 is assigned to the machine 1-1 from the start time on the first day,
(2) job 2 is assigned to the machine 1-2 from the start time on the first day,
(3) job 7 is assigned to the machine 1-1 after job 1 has been finished,
(4) job 4 is assigned to the machine 1-2 after job 2 has been finished, and
(5) job 1 is assigned to the machine 1-2 after job 4 has been finished. For each of the job sequences 6a, the schedule determination unit 42 outputs to the solution pool 9 the schedule s in which the job assignment to all step 1 to step 4 is completed in this manner. In the schedule s, assignment information indicating assignment of the jobs, a processing time period used for all the steps, and the like are indicated.

FIG. 6 illustrates an example of a control process performed by the control unit. In FIG. 6, a solid line A indicates an example of the processing time period until all the jobs indicated by each of the schedules s held in the solution pool 9 are completed (referred to as an "entire job processing time period" hereafter) represented by a two-dimensional graph in which the horizontal axis indicates the solution space and the vertical axis indicates the entire job processing time period.

The schedules s obtained by the schedule determination unit 42 for the respective job sequences 6a correspond to values in the solution space along the horizontal axis, and the entire job processing time periods indicated by the schedules s are indicated by the values along the vertical axis. Since the schedules s obtained by the schedule determination unit 42 and the job sequences 6a are associated with each other on a one-to-one basis, description is made for a graph of the entire job processing time periods with respect to the job sequences given to the schedule determination unit 42.

The solid line A in the graph of FIG. 6 represents a shape that is drawn so as to pass through points at which the job sequences 6a and the entire job processing time periods are two-dimensional coordinates. The control unit 43 randomly selects one of the job sequences 6a from the plurality of job sequences 6a held in the solution pool 9. The selected job sequence 6a corresponds to a point 5a on the solid line A.

A point $3_1$ to a point $3_7$ included in the neighborhood $\alpha$ designated by the parameters 53 are randomly generated around the point 5a. The control unit 43 obtains the number of generated pieces of sample data from the parameters 53 and randomly generates the job sequence 6b the distance of which from the job sequence 6a selected from the solution pool 9 is smaller than or equal to the neighborhood $a/2$. In this example, the job sequence 6b corresponding to 7 points including the point $3_1$ to the point $3_7$ is generated.

Hereafter, the selected job sequence 6a and the generated job sequence 6b are each simply referred to as the job sequence 6b (FIGs. 3 and 4). In FIG. 6, the values of the selected point 5a and the generated points $3_1$ to $3_7$ in the solution space (hereafter, simply referred to as "the point 5a and the point $3_1$ to the point $3_7$) correspond to the job sequence 6b.

The control unit 43 causes the QUBO generation unit 44 to predict the function F representing the entire job processing time period and generate the QUBO by using the job sequence 6b (the point 5a and the point $3_1$ to the point $3_7$). The control unit 43 designates the job sequence 6b (the point 5a and the point $3_1$ to the point $3_7$) and the model construction technique and a model evaluation method designated by the parameters 53. The QUBO generation unit 44 predicts the function F by using the model construction technique and the model evaluation method designated by the control unit 43. The function F is a quadratic expression obtained by approximating the point 5a and the point $3_1$ to the point $3_7$. The shape drawn by the function F is expressed by a set of points obtained by mapping the point 5a and the point $3_1$ to the point $3_7$ by the function F and is discrete.

When the QUBO generation unit 44 notifies the cost minimization unit 45 of the generated QUBO, a point 2f at which the entire job processing time period is the smallest among the eight points approximated by the function F is identified by the cost minimization unit 45. The cost minimization unit 45 identifies, from among the point 5a and the point $3_1$ to the point $3_7$, a point before being approximated from the identified point 2f. In this example, the point $3_5$ is identified. The point $3_5$ obtained by the cost minimization unit 45 is notified to the control unit 43. The coordinates of the point $3_5$ of the job sequence 6b in the solution space correspond to the job sequence 6c.

The control unit 43 causes the schedule determination unit 42 to perform the schedule determination process based on the job sequence 6c and obtains a schedule s'. The control unit 43 uses the model evaluation method designated, among the selected point 5a and the job sequence 6b at the obtained point $3_5$, by a second parameter to determine a job sequence that is better (cost is smaller) by using the cost evaluation indices.

In this example, the entire job processing time period corresponds to the cost, and the job sequence with the smaller entire job processing time period is identified. When the cost is the delivery time, the best job sequence is identified in accordance with a cost condition for selecting a more preferable job sequence such as a job sequence with a shorter delivery time or a job sequence with a small deviation from the delivery time. An index for evaluating the schedule s is given by the cost evaluation indices of the job information 51.

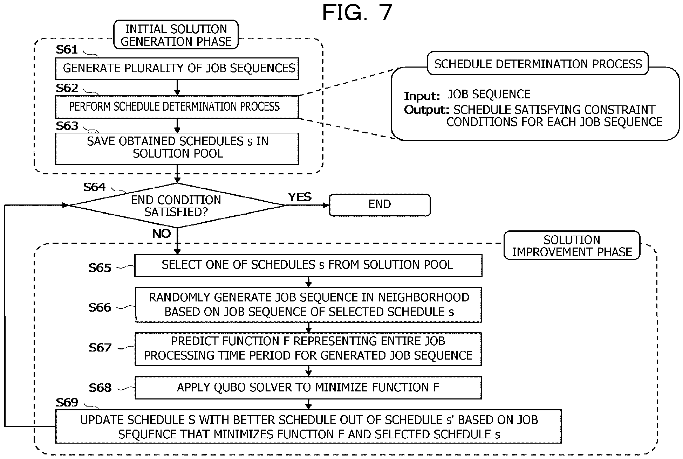

FIG. 7 is a diagram for explaining the solving process performed by the solution processing unit. In FIG. 7, in the solution processing unit 40, first, the initial solution generation unit 41 generates the initial solution (schedule s) by using the schedule determination unit 42 (schedule determination algorithm) (initial solution generation phase). By using the generated initial solution, the control unit 43 executes processing for obtaining the optimum solution (schedule S) that is able to minimize the cost (solution improvement phase) until the end conditions 54 are satisfied.

The initial solution generation unit 41 generates the job sequences 6a by using a plurality of job numbers designated in the job information 51 (step S61). As for the job sequences 6a to be generated, instead of generating combinations by brute-force (n!) based on the total number (n) of jobs, it is sufficient that any number of combinations is able to be designated and the designated number of combinations are randomly created.

The initial solution generation unit 41 notifies the schedule determination unit 42 of the plurality of generated job sequences 6a and causes the schedule determination unit 42 to perform a schedule determination process that determines the respective schedules s that satisfies the constraint conditions 52 for the job sequences 6a (step S62). The schedule determination unit 42 stores in the solution pool 9 the respective schedules s satisfying the constraint conditions 52 for the job sequences 6a (step S63).

The control unit 43 causes the end determination unit 46 to perform end determination based on the end conditions 54 (step S64). When the end determination unit 46 determines that the end conditions 54 are satisfied (YES in step S64), the control unit 43 ends this solving process. When the end conditions 54 are satisfied, the end determination unit 46 outputs the result data 8 including the obtained optimum solution (schedule S) to the storage unit 130 and notifies the control unit 43 of the end. In response to this end notification, the control unit 43 ends this solving process. In contrast, when the end determination unit 46 determines that the end conditions 54 are not satisfied (NO in step S64), the control unit 43 repeats the solution improvement phase.

The control unit 43 selects a single schedule s from the solution pool 9 (step S65). Then, the control unit 43 generates the job sequences 6b in the neighborhood $\alpha$ around the job sequence 6a corresponding to the selected schedule s (step S66). The control unit 43 calculates the number of generated pieces of sample data (for example, $2\alpha$ + 1) by using the neighborhood $\alpha$ of the parameters 53 and randomly generates the job sequences 6b of the number of generated pieces of sample data in the neighborhood $\alpha$ around the job sequence 6a corresponding to the schedule s.

Next, by using the QUBO generation unit 44, the control unit 43 predicts the function F that represents the entire job processing time period for the job sequences 6b generated in the step S66 (step S67). The entire job processing time period is an example of the performance of the schedule determination process. When the QUBO generation unit 44 predicts the function F, the QUBO generation unit 44 obtains values of parameters Q, q, and r of the QUBO from the predicted function F. The QUBO information 7 including the obtained values of the parameters Q, q, and r is notified to the cost minimization unit 45.

In response to the notification of the QUBO information 7, the cost minimization unit 45 minimizes the function F by applying the QUBO solver based on the QUBO information 7 (step S68). To apply the QUBO solver to minimize the function F is, for example, in FIG. 6, to obtain the point $3_5$ (job sequence 6c) by using the function F from the point 2f that takes a minimum value in the predicted function F out of the job sequences 6b. The job sequence 6c is notified as a return value to the control unit 43.

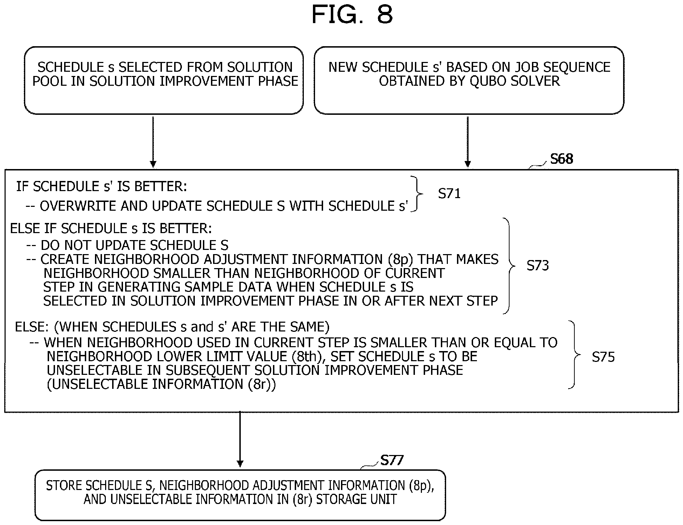

The control unit 43 updates the schedule S to be output with a better schedule out of the schedules s' based on the job sequences 6c that minimizes the function F (step S69). The updating process in step S69 will be described later in detail with reference to FIG. 8. Then, the control unit 43 returns to step S64 and repeats the above-described similar process until the end conditions 54 are satisfied.

FIG. 8 is a flowchart for explaining the updating process in step S69 illustrated in FIG. 7. In FIG. 8, in the solution improvement phase, the control unit 43 evaluates based on the cost evaluation indices the schedule s selected from the solution pool 9 and the new schedule s' based on the job sequence 6c that the cost minimization unit 45 has obtained by using the QUBO solver.

When the control unit 43 determines that the schedule s' is better as a result of the evaluation, the control unit 43 overwrites and updates the schedule S with the schedule s' (step S71).

In contrast, when it is determined that the schedule s is better, instead of updating the schedule S, the control unit 43 creates neighborhood adjustment information 8p that designates a decrease in a value of the neighborhood $\alpha$ (step S73). The neighborhood adjustment information 8p is information that designates the decrease in the value of the neighborhood $\alpha$ in generating the sample data to a value smaller than that of the current step when the schedule s is selected in the solution improvement phase in or after the next step. As an example, the neighborhood adjustment information 8p may indicate the value of the current neighborhood $\alpha$. In the solution improvement phase in or after the next step, when the control unit 43 selects the schedule s in which the neighborhood adjustment information 8p exists in the storage unit 130, the control unit 43 decreases the neighborhood $\alpha$ to a value smaller than the value designated by the neighborhood adjustment information 8p.

When the schedule s and the schedule s' are the same and the neighborhood used in the current step is smaller than or equal to a neighborhood lower limit value 8th, the control unit 43 sets that the schedule s is unselectable in the subsequent solution improvement phase (step S75). The schedule s is added to unselectable information 8r. In the solution improvement phase in or after the next step, the control unit 43 reselects the schedule s when a schedule s existing in the unselectable information 8r is selected.

The control unit 43 stores the schedule S, the neighborhood adjustment information 8p, and the unselectable information 8r in the storage unit 130 (step S77).

The number of variables processed in the solution improvement phase according to the present embodiment is as follows.

$$(\text{Number of variables}) = (\text{Number of jobs}) \times (2\alpha + 1)$$

Here, $\alpha$ is a positive integer and indicates the size of the neighborhood. When the number of jobs is 60 and the neighborhood $\alpha$ is 2, the number of variables according to the present embodiment is 300 (= 60 $\times$ 5).

Meanwhile, in the existing QUBO solver, in addition to the same number of jobs "60", the constraint conditions 52 such as the number of machines, the number of occupied resources, and the upper limit of discrete time are also variables. For example, when the number of machines is "12", the number of occupied resources is "10", and the upper limit of the discrete time is "2880",

$$(\text{Number of variables}) = (\text{Number of jobs}) \times (\text{Number of machines})$$

$$\times (\text{Number of occupied resources}) \times (\text{Upper limit of discrete time}).$$

Thus, the number of variables is 20736000 (= 60 $\times$ 12 $\times$ 10 $\times$ 2880). Compared to 300 variables according to the present embodiment, the number of variables is 96120 times greater, and it is difficult to obtain the optimum solution.

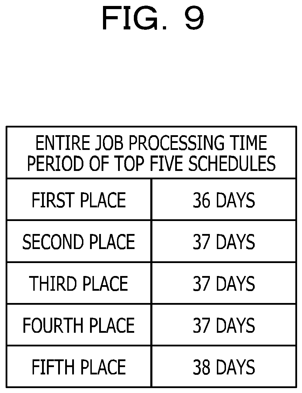

FIG. 9 illustrates results obtained by using verification data according to the present embodiment. The existing QUBO solver and the present embodiment are verified on the assumption that the number of jobs is 68, the number of steps is 6, and the number of machines is 2 per step.

When the QUBO solver of a greedy algorithm as the existing QUBO solver is verified, the entire job processing time period of the best schedule is "44 days".

Meanwhile, when the present embodiment is verified, as illustrated in FIG. 9, the top five schedules are obtained, and the entire job processing time period of a first place schedule being the optimum solution is "36 days". Second place, third place, and fourth place schedules that follow the first place schedule are "37 days" and a fifth place schedule is "38 days". In all the schedules of the first place to the fifth place, solutions (schedules) better than that obtained with the existing QUBO solver are able to be obtained.

As described above, according to the present embodiment, the performance of the schedule determination process is estimated as the quadratic regression model (function F). Thus, the solving performance may be improved while a large number of 0-1 variables are not used. Since the quadratic regression model (function F) is expressed as the objective function in the QUBO, complex constraints that are seen in practice are usually not expressed as mathematical expressions. Since the mechanism for obtaining candidate solutions is provided, discussions able to be performed in practice may be efficiently performed.

All the examples and specific terms described herein are intended for instructive purposes to aid the reader in understanding the present invention and the concept contributed by the inventors to facilitate the technique. These examples and the specific terms are to be interpreted so as not to be limited to the configuration of any example of the present specification or such described specific examples or conditions regarding indication of the superiority or inferiority of the present disclosure.

According to the present embodiment, the schedule determination unit 42 is the example of the algorithm, part of the control unit 43 is an example of an updating unit, part of the control unit 43 and the QUBO generation unit 44 are an example of a prediction unit, and the cost minimization unit 45 is an example of a minimization unit. The job sequences 6a, 6b and 6c are the examples of the combinations of the constraint conditions, and the schedule S is the example of the optimum solution. In FIG. 6, the points 5a to 5d are examples of initial solutions, the points $3_1$ to $3_7$ are examples of

neighborhood solutions, and the entire job processing time period is an example of the cost.

Although the embodiment of the present invention has been described in detail, it is to be understood that various changes, various types of replacement, and various modifications are able to be made to the embodiment without departing from the gist and scope of the present invention.

Regarding the above-described embodiment, further, the following appendices are disclosed.

[Reference Signs List]

| | |
|---|---|
| 6a, 6b, 6c | job sequence |
| 7 | QUBO information |
| 8 | result data |
| 9 | solution pool |
| 40 | solution processing unit |
| 41 | initial solution generation unit |
| 42 | schedule determination unit |
| 43 | control unit |
| 44 | QUBO generation unit |
| 45 | cost minimization unit |
| 46 | end determination unit |
| 50 | input data |
| 52 | constraint conditions |
| 53 | parameters |
| 54 | end conditions |

[Citation List]

[Patent Literature]

Japanese Laid-open Patent Publication No. 2009-294952
Japanese Laid-open Patent Publication No. 2003-280714

[Non Patent Literature]

Venturelli, Davide et al., "Job Shop Scheduling Solver based on Quantum Annealing", Quantum Artificial Intelligence Laboratory (QuAIL), NASA Ames, U.S.R.A. Research Institute for Advanced Computer Science (RIACS), 1QB Information Technologies (1QBit), arXiv: 1506.08479v2 [quant-ph] 17 Oct. 2016

**Claims**

1. An information processing apparatus comprising:

a prediction unit that predicts a function corresponding to performance of an algorithm, the algorithm being configured to perform mapping from a combination of a plurality of constraint conditions to a solution space; and
a minimization unit that expresses the function predicted by the prediction unit as an objective function as an optimization problem which does not include the plurality of constraint conditions, that minimizes a value of the function, and that identifies the combination of the plurality of constraint conditions that obtains an optimum solution from the algorithm by using the function the value of which is minimized.

2. The information processing apparatus according to claim 1, further comprising:

an initial solution generation unit that gives a plurality of first combinations to the algorithm and generates respective first solutions for the plurality of first combinations, wherein
the prediction unit

generates a plurality of second combinations in a neighborhood of one of the combinations that corresponds to a single selected solution from among the first solutions generated by the initial solution generation unit, gives the generated plurality of second combinations to the algorithm to obtain a plurality of second solutions that exist in the neighborhood of the selected solution, and

creates the function by approximating respective costs of the obtained plurality of second solutions.

3. The information processing apparatus according to claim 1 or 2, wherein
the minimization unit

obtains, out of the plurality of second solutions, a solution a value of which is minimized by the function, and the minimization unit identifies, out of the plurality of second combinations, a third combination that corresponds to a third solution approximated to the solution the value of which is minimized by the function.

4. The information processing apparatus according to claim 3, further comprising:
an updating unit that updates the optimum solution with the third solution in a case where the third solution is better when the selected solution and the third solution that corresponds to the third combination are evaluated.

5. The information processing apparatus according to claim 4, wherein
the updating unit

performs control by which, in a case where the selected solution is better, the optimum solution is not updated and, in a case where the selected solution is reselected from among the first solutions, a size of the neighborhood is reduced.

6. The information processing apparatus according to claim 4, wherein
the updating unit

performs control by which, when evaluations of the selected solution and the third solution are identical to each other and the current neighborhood is smaller than or equal to a neighborhood lower limit value, reselection of the selected solution is disabled.

7. The information processing apparatus according to any one of claims 1 to 6, wherein
the minimization unit includes a quadratic unconstrained binary optimization (QUBO) solver.

8. A method of solving that causes a computer to execute a process, the process comprising:

predicting a function corresponding to performance of an algorithm, the algorithm being configured to perform mapping from a combination of a plurality of constraint conditions to a solution space;
expressing the function predicted by the predicting an objective function as an optimization problem which does not include the plurality of constraint conditions;
minimizing a value of the function; and
identifying the combination of the plurality of constraint conditions that obtains an optimum solution from the algorithm by using the function the value of which is minimized.

9. A solving program comprising instructions which, when the program is executed by a computer, cause the computer to carry out processing, the processing comprising:

predicting a function corresponding to performance of an algorithm, the algorithm being configured to perform mapping from a combination of a plurality of constraint conditions to a solution space;
expressing the function predicted by the predicting an objective function as an optimization problem which does not include the plurality of constraint conditions;
minimizing a value of the function; and
identifying the combination of the plurality of constraint conditions that obtains an optimum solution from the algorithm by using the function the value of which is minimized.

FIG. 1

FIG. 2

**100**

INFORMATION PROCESSING APPARATUS

**11**

CPU

**12**

PRIMARY
STORAGE
DEVICE

**13**

AUXILIARY
STORAGE
DEVICE

**14**

INPUT DEVICE

**B**

BUS

DISPLAY DEVICE

**15**

COMMUNICATION
I/F

**17**

DRIVE DEVICE

**18**

STORAGE
MEDIUM

**19**

## FIG. 3

# FIG. 4

**51**
-- JOB NUMBER
-- JOB TYPE
-- NUMBER OF JOBS
-- JOB SIZE
-- COST EVALUATION INDEX
-- GENERATION RANGE
...

**52**
-- MACHINE INFORMATION
-- OCCUPIED RESOURCE INFORMATION

**40**
SOLUTION PROCESSING UNIT

**41**
INITIAL SOLUTION GENERATION UNIT

**6a**
JOB SEQUENCE

**42**
SCHEDULE DETERMINATION UNIT

**54**
-- SOLUTION LIMIT TIME PERIOD
-- CANDIDATE SOLUTION DETERMINATION CRITERION

**9**
SOLUTION POOL

SCHEDULE s

**6c**
JOB SEQUENCE

SCHEDULE s'

SCHEDULE s

**43**
CONTROL UNIT

END DETERMINATION UNIT
**46**

SCHEDULE s

**8**
RESULT DATA

**53**
-- INITIAL VALUE OF NEIGHBORHOOD α
-- MODEL CONSTRUCTION METHOD
-- MODEL EVALUATION INDEX
-- NUMBER OF GENERATED PIECES OF SAMPLE DATA

**6b**
JOB SEQUENCE

**6c**
JOB SEQUENCE

**7**
QUBO INFORMATION

QUBO GENERATION UNIT
**44**

COST MINIMIZATION UNIT (QUBO SOLVER)
**45**

FIG. 5

| FIRST DAY | SECOND DAY | THIRD DAY | FOURTH DAY | FIFTH DAY |
|---|---|---|---|---|

MACHINE 1-1

MACHINE 1-2

(1)　　　(2)　　　　　　(4)　　　(5)

(3)

6a
JOB SEQUENCE

JOB 5　　JOB 2　　JOB 7　　JOB 4　　JOB 1　　・・・

# FIG. 6

ENTIRE JOB
PROCESSING TIME
PERIOD

SOLUTION SPACE

NEIGHBORHOOD $\alpha$

# FIG. 7

**INITIAL SOLUTION GENERATION PHASE**

S61
GENERATE PLURALITY OF JOB SEQUENCES

S62
PERFORM SCHEDULE DETERMINATION PROCESS

S63
SAVE OBTAINED SCHEDULES s IN SOLUTION POOL

**SCHEDULE DETERMINATION PROCESS**

**Input:** JOB SEQUENCE
**Output:** SCHEDULE SATISFYING CONSTRAINT CONDITIONS FOR EACH JOB SEQUENCE

S64
END CONDITION SATISFIED? — YES → END

NO

**SOLUTION IMPROVEMENT PHASE**

S65
SELECT ONE OF SCHEDULES s FROM SOLUTION POOL

S66
RANDOMLY GENERATE JOB SEQUENCE IN NEIGHBORHOOD BASED ON JOB SEQUENCE OF SELECTED SCHEDULE s

S67
PREDICT FUNCTION F REPRESENTING ENTIRE JOB PROCESSING TIME PERIOD FOR GENERATED JOB SEQUENCE

S68
APPLY QUBO SOLVER TO MINIMIZE FUNCTION F

S69
UPDATE SCHEDULE S WITH BETTER SCHEDULE OUT OF SCHEDULE s' BASED ON JOB SEQUENCE THAT MINIMIZES FUNCTION F AND SELECTED SCHEDULE s

# FIG. 8

SCHEDULE s SELECTED FROM SOLUTION POOL IN SOLUTION IMPROVEMENT PHASE

NEW SCHEDULE s' BASED ON JOB SEQUENCE OBTAINED BY QUBO SOLVER

S68

IF SCHEDULE s' IS BETTER:
-- OVERWRITE AND UPDATE SCHEDULE S WITH SCHEDULE s' } S71

ELSE IF SCHEDULE s IS BETTER:
-- DO NOT UPDATE SCHEDULE S
-- CREATE NEIGHBORHOOD ADJUSTMENT INFORMATION (8p) THAT MAKES NEIGHBORHOOD SMALLER THAN NEIGHBORHOOD OF CURRENT STEP IN GENERATING SAMPLE DATA WHEN SCHEDULE s IS SELECTED IN SOLUTION IMPROVEMENT PHASE IN OR AFTER NEXT STEP } S73

ELSE: (WHEN SCHEDULES s and s' ARE THE SAME)
-- WHEN NEIGHBORHOOD USED IN CURRENT STEP IS SMALLER THAN OR EQUAL TO NEIGHBORHOOD LOWER LIMIT VALUE (8th), SET SCHEDULE s TO BE UNSELECTABLE IN SUBSEQUENT SOLUTION IMPROVEMENT PHASE (UNSELECTABLE INFORMATION (8r)) } S75

S77

STORE SCHEDULE S, NEIGHBORHOOD ADJUSTMENT INFORMATION (8p), AND UNSELECTABLE INFORMATION IN (8r) STORAGE UNIT

# FIG. 9

| ENTIRE JOB PROCESSING TIME PERIOD OF TOP FIVE SCHEDULES | |
|---|---|
| FIRST PLACE | 36 DAYS |
| SECOND PLACE | 37 DAYS |
| THIRD PLACE | 37 DAYS |
| FOURTH PLACE | 37 DAYS |
| FIFTH PLACE | 38 DAYS |

Europäisches
Patentamt

European
Patent Office

Office européen
des brevets

**EUROPEAN SEARCH REPORT**

Application Number

EP 21 15 9908

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | OHZEKI MASAYUKI: "Breaking limitation of quantum annealer in solving optimization problems under constraints", SCIENTIFIC REPORTS, [Online] vol. 10, no. 1, 13 February 2020 (2020-02-13), XP055827406, DOI: 10.1038/s41598-020-60022-5 Retrieved from the Internet: URL:https://arxiv.org/pdf/2002.05298.pdf> [retrieved on 2021-07-23] * abstract * * page 2 - page 5 * | 1-9 | INV. G06N5/00 |
| A | AJAGEKAR AKSHAY ET AL: "Quantum computing based hybrid solution strategies for large-scale discrete-continuous optimization problems", COMPUTERS & CHEMICAL ENGINEERING, PERGAMON PRESS, OXFORD, GB, vol. 132, 31 October 2019 (2019-10-31), XP085915968, ISSN: 0098-1354, DOI: 10.1016/J.COMPCHEMENG.2019.106630 [retrieved on 2019-10-31] * the whole document * | 1-9 | |
| | | | TECHNICAL FIELDS SEARCHED (IPC) |
| | | | G06N |
| A | DAISUKE INOUE ET AL: "Model Predictive Control for Finite Input Systems using the D-Wave Quantum Annealer", ARXIV.ORG, CORNELL UNIVERSITY LIBRARY, 201 OLIN LIBRARY CORNELL UNIVERSITY ITHACA, NY 14853, 6 January 2020 (2020-01-06), XP081572538, * the whole document * | 1-9 | |

The present search report has been drawn up for all claims

| Place of search | Date of completion of the search | Examiner |
|---|---|---|
| The Hague | 26 July 2021 | Tsakonas, Athanasios |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009294952 A

- JP 2003280714 A

**Non-patent literature cited in the description**

- **VENTURELLI, DAVIDE et al.** Job Shop Scheduling Solver based on Quantum Annealing. Quantum Artificial Intelligence Laboratory (QuAIL), NASA Ames, U.S.R.A. Research Institute for Advanced Computer Science (RIACS), 1QB Information Technologies (1QBit), 17 October 2016